# FASCICULE DE BREVET EUROPEEN

(11) **EP 3 042 851 B1**
(45) Date de publication et mention de la délivrance du brevet: **07.06.2017**
(21) Numéro de dépôt: 15200898.3
(22) Date de dépôt: 17.12.2015
(51) Int. Cl.: B64C 27/48

(54) **ROTOR DE GIRAVION COMPORTANT UN MOYEU EN MATERIAUX COMPOSITES ISSUS DE TISSUS DE FIBRES DE CARBONE POUDREES D'UNE RESINE THERMOPLASTIQUE**
ROTOR EINES DREHFLÜGELFLUGZEUGS, DER EINEN KOPF AUS VERBUNDMATERIALIEN UMFASST, WELCHE AUS KARBONFASERBAHNEN BESTEHEN UND MIT EINEM THERMOPLASTISCHEN HARZ PULVERBESPRÜHT SIND
A ROTORCRAFT ROTOR COMPRISING A HUB MADE OF COMPOSITE MATERIALS OBTAINED FROM CARBON FIBER FABRIC DUSTED WITH A THERMOPLASTIC RESIN

(30) Priorité: 08.01.2015 FR 1500021
(43) Date de publication de la demande: 13.07.2016
(73) Titulaire: Airbus Helicopters, 13725 Marignane Cedex (FR)
(72) Inventeur: FERRANT, Matthieu, 13090 AIX EN PROVENCE (FR); MAZET, Stéphane, 13340 ROGNAC (FR)
(74) Mandataire: GPI & Associés

(56) Documents cités:
- EP-A1- 0 340 095
- EP-A2- 0 120 803
- FR-A1- 2 653 405
- GB-A- 2 092 541
- US-A- 5 478 204

## Description

La présente demande est du domaine des giravions et a plus spécifiquement pour objet un rotor de giravion comportant un moyeu en matériaux composites sur lequel sont montées les pales de la voilure tournante dudit rotor.

L'invention a plus spécifiquement pour objet un rotor de giravion comportant un moyeu en matériaux composites sur lequel sont montées les pales de la voilure tournante dudit rotor.

Les giravions sont des aéronefs à voilure(s) tournante(s) comportant au moins un rotor, dont au moins un rotor principal à axe sensiblement vertical procurant au moins la sustentation du giravion.

Dans le cadre spécifique d'un hélicoptère, ledit au moins un rotor principal procure non seulement la sustentation du giravion, mais aussi sa propulsion suivant des directions de progression quelconques. L'attitude en vol de l'hélicoptère peut aussi être modifiée par un pilote du giravion opérant une variation cyclique et/ou collective du pas des pales composant la voilure tournante du rotor principal.

Les giravions sont aussi équipés d'un dispositif anticouple procurant leur guidage en lacet, tel que notamment au moins un rotor annexe à axe sensiblement horizontal. Un tel rotor annexe est par exemple un rotor arrière ou peut être formé d'une hélice propulsive dans le cadre d'un hélicoptère à vitesses élevées de propulsion.

Les pales d'un rotor de giravion sont classiquement montées sur un moyeu pour leur entraînement en rotation. Le moyeu est monté sur un arbre tournant, tel qu'un mât en ce qui concerne un rotor principal, entraîné en rotation par un groupe de motorisation fournissant la puissance mécanique nécessaire au fonctionnement du giravion.

Par ailleurs, les pales sont individuellement montées mobiles sur le moyeu au moins autour d'un axe de variation de pas, afin de permettre à un pilote du giravion de faire varier leur pas au moins collectivement sinon aussi cycliquement pour modifier l'attitude en vol du giravion.

En ce qui concerne plus particulièrement un rotor principal, les pales sont non seulement montées pivotantes autour de leur axe de variation de pas, mais sont aussi couramment montées mobiles en traînée et en battement.

Plus particulièrement dans ce cas, les pales sont montées mobiles sur le moyeu non seulement autour de leur axe de variation de pas, mais aussi autour d'un axe de battement orienté parallèlement au plan général d'une pale considérée, soit principalement perpendiculairement à l'orientation du plan de rotation du moyeu, et autour d'un axe de traînée orienté perpendiculairement au plan général d'une pale considérée, soit principalement parallèlement à l'orientation de l'axe de rotation du moyeu.

A propos des orientations de l'axe de battement et de l'axe de traînée, les orientations principales indiquées par rapport à l'orientation de l'axe de rotation du moyeu sont typiquement à apprécier compte tenu de la mobilité de la pale dans son plan général autour de ses différents axes de mobilité par rapport au moyeu.

Dans ce contexte, la résistance mécanique du moyeu d'un rotor de giravion est bien évidemment adaptée aux efforts qu'il doit supporter en fonctionnement. De tels efforts résultent notamment non seulement de la force centrifuge générée par l'entraînement en rotation du rotor, mais aussi de la mobilité des pales sur le moyeu, au moins autour de leur axe de variation de pas sinon aussi le cas échéant en ce qui concerne un rotor principal autour de leur axe de battement et autour de leur axe de traînée.

Traditionnellement, le moyeu d'un rotor de giravion est formé d'une pièce de métal.

Cependant, une telle structure métallique du moyeu tend à lui conférer une masse importante qu'il est opportun de limiter dans le domaine de l'aéronautique. En outre, un moyeu métallique doit être usiné pour recevoir de manière adéquate les différents organes procurant la jonction du moyeu à l'arbre tournant d'une part et la jonction en mobilité des pales sur le moyeu d'autre part.

Il en ressort qu'un tel moyeu métallique, bien que satisfaisant au regard de sa fonction et notamment de sa robustesse, présente cependant les inconvénients d'être pesant à volume donné et coûteux à obtenir.

De tels inconvénients peuvent être limités dans le cadre spécifique d'un moyeu comportant des branches flexibles sur lesquelles sont montées les pales pour procurer leur mobilité sur le moyeu. En effet dans ce contexte, il est connu de réaliser un moyeu de rotor d'un giravion en matériaux composites formés par empilement de couches en tissus de fibres minérales imprégnées d'une résine thermodurcissable.

Ainsi les documents EP2234880 équivalent au document US2011116936 et US8147198 divulguent un étrier en matériaux composites formant le moyeu d'un rotor de giravion et son procédé de fabrication. Ledit étrier est réalisé à partir de couches en tissus de fibres de verre imprégnées d'une résine thermodurcissable et comporte des branches respectivement porteuses des pales.

Les matériaux composites dont est issu l'étrier sont mis à profit pour ménager la mobilité des pales en battement. Plus particulièrement, un affaiblissement localisé des branches de l'étrier confère aux branches une flexibilité en battement.

Il a aussi été proposé par le document EP0221678 équivalent au document US4714409, de réaliser le moyeu d'un rotor de giravion selon lequel des branches flexibles de jonction des pales au moyeu sont formées d'une résine dans laquelle sont noyées des plaques de renfort issues de matériaux composites. Les matériaux composites exploités pour former les branches flexibles, voire la totalité du moyeu, sont plus spécifiquement formés à partir de couches en tissus de fibres de carbone imprégnées d'une résine thermodurcissable.

Dans le domaine de l'invention, les documents suivant ont également été consultés.

Le document EP0120803 équivalent au document US4568244 décrit un moyeu de rotor principal pour hélicoptère, en matrice composite de fibres de renforcement et époxy. Ce moyeu en matériaux composite est pourvu d'alvéoles comprenant une assise d'appui radial à portée plate pour soutenir les pales

Le document EP0340095 équivalent au document US4915585 décrit un moyeu de rotor en matériel composite et sensiblement cruciforme sans préciser la liaison entre son armature radiale externe et la bordure de ce moyeu.

Le document FR2653405 équivalent au document US5141398 décrit un dispositif d'amortissement et de rappel élastique en traînée, pour pales de rotor de giravion. Chaque pale du rotor comporte un pied par lequel la pale est accouplée à un moyeu lui-même entraîné en rotation autour d'un axe du rotor. Une couronne mince en matériau viscoélastique possède des parois interne et externe sont adhérisées respectivement à une armature interne et à une armature externe. L'armature externe présente un levier sur lequel est articulée par une rotule, une bielle rigide équipée d'une rotule d'articulation pour rendre la bielle solidaire en mouvement du pied de pale. L'armature interne est solidarisée à un support entraîné par le moyeu.

Le document GB2092541 équivalent au document US4425082 décrit un moyeu composite pour rotor d'hélicoptère. Ce moyeu est formé d'une plaque plane traversée par une série d'ouvertures uniformément réparties sur son pourtour. Chacune de ces ouvertures est apte à recevoir un accouplement flexible de liaison avec une pale associée. La plaque présente une structure stratifiée comportant un élément répartiteur d'efforts en couche médiane. Des éléments radiaux folliculaires sont disposés de part et d'autre de l'élément répartiteur et s'étendent dans des plans perpendiculaires à l'axe de rotation. Chaque élément annulaire folliculaire est disposé de chaque côté de l'élément répartiteur et entre en contact avec les extrémités libres de la série associée d'éléments radiaux.

Le document US4818179 décrit un moyeu pour rotor d'hélicoptère comportant une plaque de rétention principale. Un anneau périphérique en matériau composite présente une orientation de fibres de renfort dans le plan de la plaque et perpendiculairement à ce plan de rétention. D'autres anneaux renforcés de fibres sont espacés perpendiculairement à l'axe central du moyeu. Ces anneaux forment une structure circonférentielle, tubulaire et aplatie qui entoure l'anneau périphérique. Un cadre annulaire comprend essentiellement des fibres circonférentielles entrelacées avec des fibres inclinées suivant un angle prédéterminé.

Le document US5478204 décrit un rotor pour aéronef à voilure tournante, avec un anneau de support de paliers de pas. Cet anneau comporte un chapeau supérieur et un chapeau inférieur. Diverses matières sont proposées pour le rotor, par exemple en résine, en époxy ou en résine thermoplastique renforcée.

Cependant, les conditions d'exploitation de tels matériaux composites pour réaliser le moyeu d'un rotor de giravion comportant des branches flexibles participant de la mobilité des pales sur le moyeu, sont notamment limitées aux giravions de catégorie légère. En effet pour les giravions de catégorie plus lourde pour lesquels les rotors supportent des efforts considérés comme conséquents, les pales sont de préférence montées sur un moyeu robuste et rigide par l'intermédiaire d'un système articulé, tel qu'une articulation en rotule procurant une mobilité multidirectionnelle des pales sur le moyeu.

Une telle articulation en rotule est par exemple ménagée en exploitant un corps en élastomère stratifié incorporant des lames de métal, couramment dénommée « butée sphérique » ou « spherical bearing » en langue anglaise. Un tel corps stratifié en élastomère/métal est intégré à une armature d'assemblage entre le moyeu et le pied de pale d'une pale considérée, en étant placé en appui contre le moyeu pour procurer de par sa déformation la mobilité des pales sur le moyeu.

Il en ressort que dans un tel contexte de montage des pales sur le moyeu par l'intermédiaire d'un système articulé, le matériau constitutif du moyeu traditionnellement choisi est le métal.

En effet, exploiter des matériaux composites pour former un tel moyeu implique communément d'avoir à renforcer le moyeu à l'encontre de sa déformation sous conditions de fonctionnement.

Un tel renfort du moyeu est couramment effectué par un ceinturage métallique du moyeu présentant principalement l'inconvénient d'induire un alourdissement du moyeu et de complexifier ses modalités d'obtention.

En outre le volume du moyeu doit être accru pour procurer le montage robuste recherché des pales en mobilité relative sur le moyeu par l'intermédiaire desdits systèmes articulés.

Un tel accroissement de volume résulte d'une nécessaire extension du moyeu non seulement en épaisseur, considérée suivant la direction d'extension axiale du moyeu, mais aussi suivant son diamètre pour conférer au moyeu sa robustesse vis-à-vis des efforts qu'il supporte en fonctionnement et vis-à-vis de ses modalités de jonction avec l'arbre tournant d'une part et avec les pales d'autres part.

Dans ce contexte, l'objet de la présente invention est de proposer un rotor de giravion comportant un moyeu en matériaux composites, dont l'agencement est adapté à un montage en mobilité relative entre les pales et le moyeu par l'intermédiaire de systèmes articulés.

Il est plus particulièrement recherché un tel moyeu en matériaux composites pouvant être obtenu à moindres coûts, en étant notamment d'une extension tant axiale que diamétrale la plus réduite possible, en évitant d'avoir à le renforcer à l'encontre de sa déformation en fonctionnement, tel que par ceinturage notamment, et en restreignant autant que possible les opérations d'usinage à effectuer en sortie de fabrication par moulage.

Les matériaux composites constitutifs du moyeu doivent être choisis non seulement en raison des avantages pouvant être procurés par les techniques de fabrication de tels matériaux composites, mais aussi en recherchant des modalités d'exploitation de tels matériaux composites permettant de structurer à moindres coûts le moyeu.

En outre une telle structuration recherchée du moyeu doit s'inscrire dans le cadre des contraintes précédemment énoncées en évitant notamment son alourdissement.

Dans ce contexte, il est fait le choix par la présente invention de former le moyeu à partir de matériaux composites d'une part issus de couches de tissus en fibres choisies en carbone et d'autre part exploitant un polymère choisi parmi les résines thermoplastiques. Le choix de tels matériaux composites permet de répondre aux fonctions devant être fournies par le moyeu et autorise des aménagements spécifiques astucieux de sa structure procurant des solutions dans le cadre de l'ensemble des contraintes précédemment identifiées et énoncées.

Dans ce contexte, le rotor de giravion de la présente invention relève principalement des rotors de giravion comportant un moyeu en matériaux composites issus d'un empilement de couches successives en tissus de fibres minérales imprégnées d'une résine.

Le moyeu est monté coaxial sur un arbre tournant procurant l'entraînement en rotation du moyeu, ledit arbre tournant s'étendant à travers un fût du moyeu. Le moyeu comporte aussi une pluralité de branches radialement étendues depuis le fût, sur lesquelles branches sont respectivement montées individuellement des pales. Lesdites pales sont montées sur le moyeu en étant individuellement mobiles au moins en variation de pas, voire aussi subsidiairement en battement et/ou en traînée en ce qui concerne notamment un rotor principal de giravion.

Selon la présente invention, un tel moyeu s'inscrit dans le cadre connu selon lequel les pales sont individuellement montées mobiles sur le moyeu par l'intermédiaire de systèmes articulés respectifs. De tels systèmes articulés comportent chacun une armature de montage respectivement sur chacune des branches du moyeu.

Lesdites armatures prennent un appui radial contre lesdites branches en étant individuellement logées au moins partiellement dans des alvéoles respectives d'un corps monolithique s'étendant suivant sa direction axiale d'extension.

Tenant compte d'un tel cadre dans lequel s'inscrit le moyeu de la présente invention, il est choisi de former essentiellement le moyeu à partir d'un corps monolithique en matériaux composites issus d'un empilement de couches successives de tissus en fibres de carbone poudrées d'une résine thermoplastique, en exploitant avantageusement la technique d'un pressage à chaud à forte pression desdites couches pour les compresser.

De tels matériaux composites permettent de former le corps monolithique à partir d'un procédé de fabrication selon lequel les fibres de carbone intégrées aux couches de tissus sont poudrées de ladite résine thermoplastique, telle que le PEEK (d'après l'acronyme de PolyEtherEtherKetone), ce qui facilite lors de la fabrication du corps monolithique la manipulation des couches de tissus alors réputées non collantes. Une telle manipulation aisée est notamment utile dans la mesure où l'obtention dudit corps monolithique nécessite un empilement d'un nombre conséquent de couches, à titre indicatif compris entre 200 et 400.

En outre, les matériaux composites choisis permettent d'obtenir ledit corps monolithique par compression desdites couches de tissus à une pression de l'ordre de 60 bars et à une température de l'ordre de 400°C.

Le corps monolithique obtenu est d'une robustesse apte à supporter les efforts auxquels est soumis le moyeu en fonctionnement. En outre, les matériaux composites choisis permettent de résoudre à moindres coûts les problèmes posés par l'exploitation d'un moyeu en matériaux composites dans le cadre d'un montage des pales sur le moyeu par l'intermédiaire d'un système articulé indépendant rapporté sur le moyeu.

En outre, il est apparu que les matériaux composites choisis conformément à la présente invention permettent de former par moulage dans le corps monolithique lesdites alvéoles recevant respectivement les armatures desdits systèmes articulés. Il est en effet constaté que la conformation de telles alvéoles peut être obtenue directement de moulage sans nécessiter des opérations d'usinage ultérieures et coûteuses pour former une prise d'appui adaptée des pales contre le moyeu.

Il est aussi à relever que la résine thermoplastique, résine PEEK notamment, choisie conformément à la présente invention pour imprégner les tissus formant les matériaux composites dont est issu le moyeu, présente des caractéristiques de résistance mécanique supérieures aux résines thermodurcissables, résine dénommée Epoxy notamment, traditionnellement utilisées pour former un moyeu en matériaux composites.

En outre, une telle résine thermoplastique ne comporte pas de solvant, avec pour avantage d'être recyclable et de répondre au mieux aux exigences de préservation de l'environnement naturel.

Cependant le choix de tels matériaux composites constitutifs du corps monolithique doit prendre en compte le problème propre à la formation d'un moyeu de rotor de giravion en matériaux composites, selon lequel le moyeu soumis à la force centrifuge générée par l'entraînement du rotor tend à se déformer.

Dans un tel contexte tenant compte d'une déformation des alvéoles sous l'effet de la mise en rotation du rotor, la conformation des alvéoles est définie de fabrication conformément à la formation d'une assise d'appui radial à portée cylindrique des armatures contre les branches sous l'effet de la mise en rotation du rotor à une vitesse de fonctionnement prédéfinie.

Ladite portée cylindrique est notamment définie par une base, orientée orthogonalement à la direction radiale de prise d'appui des armatures contre les branches, de conformation générale arquée telle que par exemple indifféremment conformée en arc de cercle ou en arc elliptique.

Ladite assise d'appui radial à portée cylindrique s'étend notamment suivant une génératrice orientée suivant la direction d'extension axiale du moyeu en étant de forme complémentaire avec une surface à portée cylindrique donnée de l'armature.

Bien évidemment, la notion « de fabrication » signifie une prise en considération de l'état du corps monolithique tel que fabriqué, c'est à dire hors contexte de sa mise sous contrainte par suite de son exploitation en fonctionnement à bord du giravion et notamment par suite de la mise en rotation du rotor et/ou de la manoeuvre des pales en mobilité sur le moyeu.

Il en ressort que pour obvier à la déformation desdites alvéoles sous l'effet de la force centrifuge appliquée au moyeu en fonctionnement, la conformation de fabrication des alvéoles prend avantageusement en compte une telle déformation des alvéoles pour ménager contre l'alvéole ladite surface d'appui, inhabituellement à portée cylindrique.

Une telle portée cylindrique de ladite surface d'appui procure un appui radial robuste de l'armature contre l'alvéole lorsque le rotor est en phase de fonctionnement.

Grâce à ces dispositions, l'extension radiale des branches peut être alors avantageusement réduite sans affecter le maintien robuste en mobilité des pales et sans avoir à renforcer la tenue en conformation du moyeu, tel que selon la technique connue de ceinturage métallique du moyeu évitant sa déformation en fonctionnement mais présentant l'inconvénient d'être pesant.

Par ailleurs il peut alors être fait le choix de diminuer progressivement l'épaisseur du moyeu depuis sa zone axiale de jonction avec l'arbre tournant vers sa périphérie, afin de réduire au mieux sa masse et son encombrement tout en conservant un maintien robuste des pales en mobilité sur le moyeu.

En effet, des cales peuvent être aisément rapportées pour compenser la pente des faces d'extrémité du moyeu contre lesquelles prend notamment appui l'armature. En effet, le caractère réversible de la polymérisation de la résine thermoplastique peut être exploité pour intégrer de telles cales au corps monolithique par moulage et plus particulièrement par surmoulage.

Selon une forme de réalisation favorisant le passage de la conformation des alvéoles de fabrication à la conformation des alvéoles en phase de fonctionnement du rotor, le profil des alvéoles dans le plan diamétral du moyeu est de conformation générale oblongue, la dimension la plus faible d'une telle conformation oblongue s'étendant notamment suivant la direction d'extension radiale du corps monolithique.

Une telle conformation générale oblongue du profil des alvéoles est notamment conférée aux alvéoles à partir d'une conformation de leur profil dans le plan diamétral du moyeu définie par une pluralité d'arcs de cercle successivement tangents, au moins au nombre de quatre notamment, deux arcs de cercle successifs présentant des rayons de courbures différents.

Un tel profil des alvéoles définit dans le plan diamétral du moyeu un arc de cercle ménageant les portions de surface des alvéoles formant lesdites assises d'appui radial des armatures contre les branches. Un premier rayon dudit arc de cercle défini de fabrication est plus important qu'un deuxième rayon conféré audit arc de cercle sous l'effet de la mise en rotation du rotor à ladite vitesse de fonctionnement prédéfinie, ledit deuxième rayon définissant en situation de fonctionnement du rotor ladite assise d'appui radial à portée cylindrique des armatures contre les branches.

A titre indicatif pour définir le premier rayon dudit arc de cercle défini de fabrication, il est notamment vérifié que, en situation d'exploitation du rotor, la pression exercée entre le corps monolithique et l'armature est inférieure à une pression admissible, par exemple définie par essais sur éprouvettes. Il est apparu que la portée cylindrique de ladite assise d'appui radial permet avantageusement d'optimiser la répartition de ladite pression.

En effet à l'arrêt du rotor, le rayon de la partie de l'armature prenant radialement appui contre les branches est plus faible que le rayon de l'arc de cercle de l'alvéole définissant de fabrication ladite assise d'appui radial à portée cylindrique de l'armature contre les branches. Sous l'effet de la force centrifuge produite par la mise en rotation du rotor, le moyeu se déforme et le rayon de l'arc de cercle de l'alvéole diminue jusqu'à épouser alors le rayon de la surface à portée cylindrique de l'armature contre les branches, en procurant la répartition de pression recherchée.

Pour conforter l'étendue axiale de la portée cylindrique de la prise d'appui radial des armatures contre les branches, il est subsidiairement proposé d'exempter le corps monolithique de dépouilles de démoulage le long des portions de surface des alvéoles formant les assises d'appui radial des armatures contre les branches.

Les dépouilles nécessaires au démoulage du corps monolithique sont alors ménagées sur les portions de surface des alvéoles complémentaires aux portions de surface des alvéoles formant lesdites assises d'appui radial des armatures contre les branches.

Le corps monolithique de la présente invention est apte à être exploité dans le cadre connu selon lequel lesdites armatures sont chacune équipées d'un corps stratifié en élastomère/métal procurant une mobilité multidirectionnelle des pales sur le moyeu. De telles armatures sont typiquement respectivement placées en appui radial contre les branches.

Dans ce cas, il est proposé de conformer inhabituellement la surface de portée des armatures contre les branches en surface à portée cylindrique définie par une génératrice orientée suivant la direction axiale d'extension du moyeu.

Dans le cas préféré où l'une au moins des faces d'extrémité axiale dudit corps monolithique est au moins partiellement inclinée par rapport au plan de rotation du moyeu, le corps monolithique est avantageusement muni de cales tel que précédemment visé. De telles cales sont des cales de compensation de la pente résultant de l'inclinaison de ladite au moins une face d'extrémité axiale du corps monolithique, lesdites cales ménageant sur le moyeu des assises d'appui axial des armatures contre les branches.

Tel que précédemment visé, il est mis à profit la résine thermoplastique pour intégrer de moulage lesdites cales au corps monolithique, en évitant d'avoir à détériorer le corps monolithique par l'utilisation d'organes de fixation, tels que par vissage par exemple, pour procurer le montage sur le corps monolithique de cales de compensation d'une pente conférée à ses faces d'extrémité axiale.

Plus particulièrement, les cales sont avantageusement intégrées au corps monolithique par surmoulage, les cales étant avantageusement issues de matériaux composites intégrant des fibres minérales, telles que des fibres de verre et/ou de carbone par exemple, noyées dans une résine thermoplastique.

Selon diverses variantes, les cales peuvent être formées à partir de matériaux composites. Ces matériaux composites peuvent être formés par empilement de couches de tissus de fibres minérales noyées dans une résine thermoplastique ou encore être potentiellement formés à partir d'un agglomérat de fibres minérales noyées dans une résine thermoplastique.

Dans le cas notamment d'un rotor principal, les pales sont susceptibles d'être en outre montées mobiles en traînée sur le moyeu au moins autour d'un axe de traînée. Dans ce cas, les faces d'extrémité périphérique des branches sont de préférence chacune munies d'un organe de protection, tel qu'un organe de protection formé d'une pièce d'usure voire encore formé d'un organe de butée limitant la course individuelle en traînée des pales.

Pour conforter le montage de tels organes de protection, ceux-ci sont de préférence chacun équipés de pattes de fixation prenant respectivement appui contre les faces d'extrémité axiale du corps monolithique.

De telles pattes de fixation, par exemple chacune agencées en étrier prenant appui contre l'une et l'autre des faces d'extrémité axiale du corps monolithique, peuvent être fixées à l'extrémité périphérique des branches par des premiers organes de fixation, tels que par exemple des vis ou des boulons, s'étendant respectivement à travers des premiers passages ménagés dans le corps monolithique suivant sa direction axiale d'extension.

Il est à prendre en compte que les matériaux composites choisis pour former le moyeu permettent de conformer avantageusement le corps monolithique selon les dispositions suivantes, considérées seules ou en combinaison :
- ledit corps monolithique est d'une épaisseur diminuant progressivement depuis une zone axialement centrale, dans laquelle est ménagé au moins le fût, vers la bordure extérieure d'une zone périphérique du corps monolithique intégrant les branches. Une telle conformation du moyeu lui confère une robustesse adaptée sans affaiblir la liaison en mobilité relative entre les pales et le moyeu.
- ledit corps monolithique est symétrique de part et d'autre d'un plan diamétral axialement médian, ce qui permet d'éviter des distorsions irrégulières de forme du moyeu en fonctionnement.
- les branches sont saillantes vers la périphérie du corps monolithique, les parties en saillie des branches étant d'une dimension d'extension radiale avantageusement réduite, à titre indicatif comprise entre 0,2 et 0,3 fois le diamètre d'encombrement du corps monolithique. Dans ce contexte et considérant une branche donnée, la distance de séparation entre l'extrémité périphérique des branches et l'assise d'appui radial des armatures contre les branches est réduite, en étant à titre indicatif de l'ordre comprise entre 0,1 et 0,15 fois le diamètre d'encombrement du corps monolithique.

De telles dispositions relatives à l'extension radiale réduite des parties en saillie des branches, permettent de renforcer les branches à l'encontre de leur déformation tout en limitant l'encombrement diamétral et la masse du moyeu. La limitation de l'extension radiale des branches permet en outre de réduire l'extension, radialement au moyeu, des pieds de pale par l'intermédiaire desquels les pales sont montées sur les branches du moyeu, avec pour avantage de conforter la robustesse du montage des pales sur le moyeu.

On relèvera qu'une telle compacité du corps monolithique obtenue par limitation de l'extension radiale des branches est notamment rendue possible par la prise en compte susvisée de la déformation des alvéoles lors de la mise en rotation du moyeu.

Plus particulièrement selon une forme spécifique de réalisation du moyeu, ledit corps monolithique comporte :
- ladite zone axialement centrale d'une épaisseur constante dans laquelle sont ménagés au moins le fût et des deuxièmes passages orientés suivant la direction axiale d'extension du moyeu en étant répartis en bordure autour du fût. Lesdits deuxièmes passages reçoivent des deuxièmes organes de fixation, tels que par exemple formés de vis ou de boulons, fixant le moyeu à au moins une platine de l'arbre tournant disposée en vis-à-vis de l'une quelconque des faces d'extrémité axiale du moyeu.
- ladite zone périphérique ménagée en prolongement radial de ladite zone centrale en diminuant progressivement en épaisseur vers sa périphérie depuis l'épaisseur de ladite zone axialement centrale. Ladite zone périphérique comporte au moins en partie chacune desdites alvéoles de réceptions respectives des armatures et des troisièmes passages orientés suivant la direction d'extension axiale du moyeu. De tels troisièmes passages reçoivent des troisièmes organes de fixation, tels que des vis ou des boulons par exemple, fixant les armatures au moyeu. De tels troisièmes passages sont notamment ménagés en traversant le cas échéant lesdites cales contre lesquelles les armatures prennent axialement appui.

Plus particulièrement, les alvéoles sont de préférence ménagées en une première partie dans ladite zone axialement centrale et en une deuxième partie dans ladite zone périphérique du corps monolithique.

Dans ce contexte, ladite deuxième partie comporte alors les portions de surface des alvéoles formant lesdites assises d'appui radial des armatures contre les branches, étant précisé si besoin que l'appui radial pris par les armatures contre les branches est orienté vers la périphérie du moyeu.

Le choix des matériaux composites formant le corps monolithique, et subsidiairement ses modalités préférées de fabrication précédemment visées, rendent possible un agencement du moyeu selon lequel :
- l'épaisseur du corps monolithique considérée à sa périphérie est de l'ordre comprise entre 30% et 40% de l'épaisseur du corps monolithique considérée dans sa zone axialement centrale, et
- le diamètre d'encombrement du corps monolithique est de l'ordre compris entre 6 et 10 fois l'épaisseur du corps monolithique considérée dans ladite zone axialement centrale.

Il est à relever que par suite des conditions de moulage du corps monolithique à partir des matériaux composites choisis et des dispositions secondaires proposées par l'invention considérées isolément ou en combinaison, les opérations d'usinage effectuées sur le corps monolithique postérieurement à son moulage peuvent être considérablement limitées.

En effet, de telles opérations d'usinage peuvent être restreintes à l'usinage de réserves ménagées de moulage à travers l'épaisseur du corps monolithique, de telles réserves formant les dits premiers passages, lesdits deuxièmes passages et/ou lesdits troisièmes passages. Par suite de leur usinage, lesdites réserves peuvent ensuite être avantageusement dotées de bagues de renfort rapportées et intégrées au corps monolithique, par scellement notamment.

Selon une variante, lesdites opérations d'usinage peuvent être restreintes à l'usinage de l'évidement intérieur de telles bagues de renfort préalablement installées à l'intérieur des dites réserves. Les bagues de renfort peuvent dans ce cas être avantageusement intégrées au corps monolithique par surmoulage en exploitant le caractère réversible de la polymérisation de la résine thermoplastique.

De telles réserves sont notamment formées conjointement à la formation éventuelle des alvéoles, en exploitant notamment la technique d'empilement des couches de tissus de fibres de carbone poudrées de résine thermoplastique sur des noyaux ménageant respectivement lesdites réserves et/ou alvéoles à travers le corps monolithique.

Par suite, il est alors potentiellement mis à profit le caractère réversible de la polymérisation de la résine thermoplastique pour munir de dites bagues de renfort indifféremment lesdits premiers passages et/ou lesdits deuxièmes passages et/ou lesdits troisièmes passages, lesdites bagues de renfort étant avantageusement intégrées au corps monolithique par surmoulage.

Par ailleurs, lesdits deuxièmes passages débouchent notamment sur l'une et l'autre des faces d'extrémité axiale du moyeu, les deuxièmes organes de fixation s'étendant de préférence à travers le moyeu et coopérant potentiellement avec un couple de platines de l'arbre tournant disposées respectivement en vis-à-vis de l'une et l'autre des faces d'extrémité axiale du moyeu pour accroître la robustesse de la jonction du moyeu avec l'arbre tournant.

Un exemple de réalisation de la présente invention va être décrit en relation avec les figures des planches annexées, dans lesquelles :
- la fig.1 est une illustration en perspective d'un rotor de giravion selon un exemple de réalisation de la présente invention,
- les fig.2 et fig.3 sont des illustrations d'un exemple de réalisation d'un corps monolithique formant essentiellement un moyeu du rotor représenté sur la fig.1, respectivement en perspective et en coupe axiale,
- la fig.4 est composée de deux schémas (a) et (b) illustrant partiellement dans son plan général le corps monolithique représenté sur les fig.2 et fig.3.

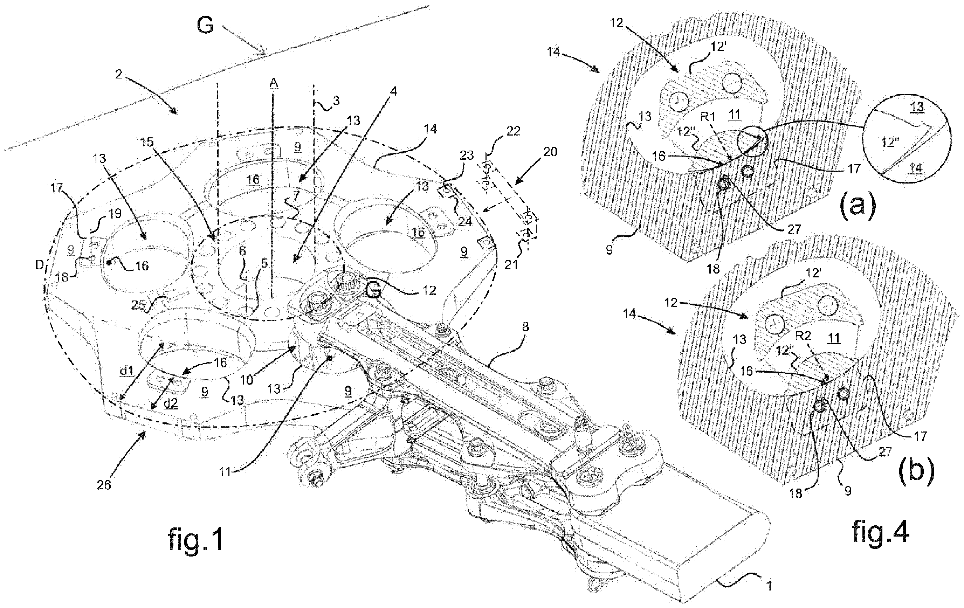

Sur la fig.1, un giravion G est représenté schématiquement. Le giravion G comporte un rotor. Ce rotor de giravion comporte des pales 1 (une seule pale partiellement illustrée) montées sur un moyeu 2. Pour son entraînement en rotation, le moyeu 2 est monté sur un arbre tournant 3 coaxial s'étendant à travers un fût 4 du moyeu. Un tel arbre tournant 3 est notamment constitué d'un mât dans le cas illustré d'un rotor principal de giravion.

A cet effet, le moyeu 2 comporte des deuxièmes passages 5 ménagés autour et en bordure du fût 4 pour la réception de deuxièmes organes de fixation 6, tels que des vis ou des boulons, procurant la fixation du moyeu 2 à au moins une platine 7 de l'arbre tournant 3.

Les pales 1 sont montées mobiles sur le moyeu 2 au moins en variation de pas, voire aussi en traînée et en battement tel que sur l'exemple de réalisation illustré. A cet effet, les pales 1 sont classiquement chacune munies d'un pied de pale 8 pour leur assemblage sur des branches 9 respectives du moyeu 2. Selon une forme courante de réalisation, la mobilité des pales 1 sur le moyeu 2 est procurée par l'intermédiaire d'un système articulé 10 interposé entre un pied de pale 8 donné et le moyeu 2.

Sur l'exemple de réalisation illustré sur les fig.1 et fig.4, un tel système articulé 10 est du type mettant en oeuvre un corps stratifié en élastomère/métal 11 intégrant des lames de métal et des couches en élastomère, communément dénommé « butée sphérique ». Le corps stratifié en élastomère/métal 11 est intégré à une armature 12 par l'intermédiaire de laquelle le système articulé 10 est monté en interposition entre un pied de pale 8 donné et le moyeu 2.

A cet effet, le moyeu 2 comporte des alvéoles 13 logeant respectivement les armatures 12. Une armature 12 donnée relie par boulonnage un pied de pale 8 au moyeu 2, en prenant axialement appui contre les faces d'extrémité axiale du moyeu 2.

Tel qu'illustré sur la fig.4, l'armature 12 est par exemple du type comprenant au moins un dit corps stratifié en élastomère/métal 11 interposé entre deux éléments d'armature 12',12". Le corps stratifié en élastomère/métal 11 est comprimé entre les éléments d'armature 12',12", un élément d'armature qualifié extérieur 12" prenant radialement appui contre les branches 9. Par suite, le corps stratifié en élastomère/métal 11, prenant radialement appui contre le moyeu 2 par l'intermédiaire de l'élément d'armature extérieur 12", procure par déformation une mobilité relative entre le moyeu 2 et le pied de pale 8.

On notera dès à présent que la notion de « axial », et par suite les notions de « diamétral » et/ou de « radial », sont à considérer suivant l'axe de rotation A du moyeu 2. Dans ce contexte, il est compris que l'épaisseur du moyeu 2 est considérée suivant sa direction d'extension axiale.

Le moyeu 2 est essentiellement constitué d'un corps monolithique 14 formé par moulage d'un empilement de couches de tissus de fibres de carbone poudrées d'une résine thermoplastique, lesdites couches de tissus étant empilées à l'intérieur d'un moule puis étant compressées à chaud à fortes pressions.

Sur les fig.1, fig.2 et fig.3, le corps monolithique 14 comporte une zone axialement centrale 15 dans laquelle sont ménagés le fût 4 et lesdits deuxièmes passages 5. Ladite zone axialement centrale 15 est diamétralement prolongée par une zone périphérique comportant au moins en partie les branches 9.

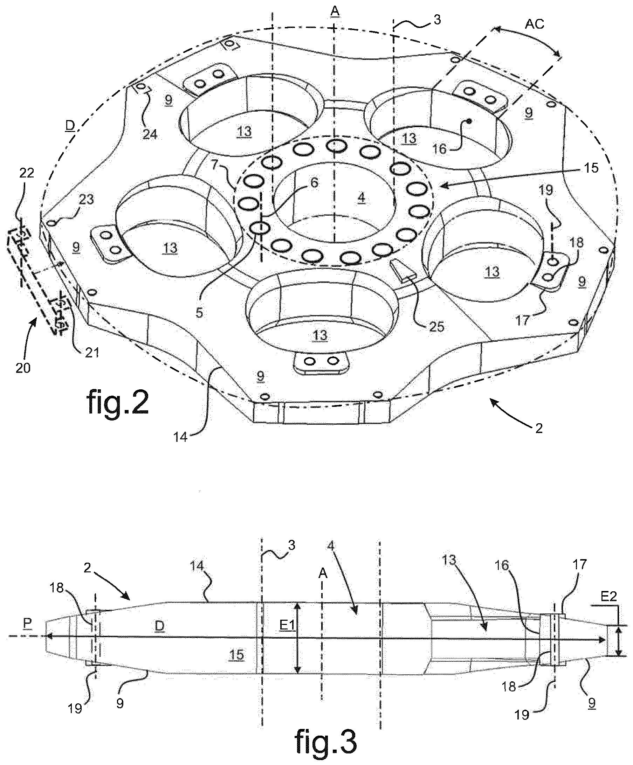

Plus particulièrement visible sur la fig.3, le corps monolithique 14 est symétrique de part et d'autre d'un plan diamétral axialement médian P. La zone axialement centrale 15 du corps monolithique14 est d'une épaisseur E1 constante favorisant la prise d'appui du moyeu contre la ou les platines équipant l'arbre tournant.

La zone périphérique du corps monolithique est d'une épaisseur E2 diminuant progressivement vers sa périphérie depuis la zone axialement centrale 15. L'épaisseur E2 du corps monolithique 14 considérée à sa périphérie est de l'ordre de 30% à 40% de son épaisseur E1 considérée dans sa zone axialement centrale 15. Plus particulièrement visible sur la fig.3, le diamètre d'encombrement D du corps monolithique 14 est de l'ordre de huit fois son épaisseur E1 considérée dans la zone axialement médiane 15.

Par ailleurs sur les fig.1 à fig.4, les alvéoles 13 ménagent une assise d'appui radial 16 à portée cylindrique des armatures 12 contre les branches 9, notamment par l'intermédiaire des corps stratifiés en élastomère/métal 11 dont elles sont équipées.

Tel qu'illustré sur la fig.1, la dimension d1 d'extension radiale des parties en saillie 26 des branches 9 vers la périphérie du corps monolithique 14 est de l'ordre de 0,2 à 0,3 fois le diamètre d'encombrement D du corps monolithique 14, pour une distance d2 de séparation entre l'extrémité périphérique des branches 9 et l'assise d'appui radial 16 des armatures 12 contre les branches 9 de l'ordre comprise, pour une branche 9 donnée, entre 0,1 et 0,15 fois le diamètre d'encombrement D du corps monolithique 14.

Tel qu'illustré sur la fig.2, les alvéoles 13 sont de conformation générale oblongue en définissant un arc de cercle AC ménageant les portions de surface des alvéoles 13 formant lesdites assises d'appui radial 16 des armatures 12 contre les branches 9.

Cependant tel qu'illustré sur la fig.4, les alvéoles 13 tendent à se déformer sous l'effet de la force centrifuge lors de la mise en rotation du rotor. Plus particulièrement sur le schéma (a) le corps monolithique 14 est représenté en station immobile du moyeu et sur le schéma (b) le corps monolithique 14 est représenté en situation tournante du moyeu. Par suite de la déformation des alvéoles 13, le rayon initial défini de fabrication dudit arc de cercle, tel qu'illustré sur le schéma (a), tend à se réduire pour épouser le rayon de la surface de l'armature 12 prenant radialement appui contre les branches 9, tel qu'illustré sur le schéma (b).

Dans ce contexte, un premier rayon R1 dudit arc de cercle AC est défini de fabrication plus important qu'un deuxième rayon R2 dudit arc de cercle AC identifié sous conditions d'une mise en rotation du rotor à sa vitesse nominale de fonctionnement. Ledit premier rayon R1 de l'arc de cercle AC est identifié, par essais notamment, conformément à une déformation des alvéoles 13 conférant audit arc de cercle AC le deuxième rayon R2 égal, tout au moins sensiblement, au rayon de la surface cylindrique d'appui des corps stratifiés en élastomère/métal 11 contre les branches 9 par l'intermédiaire de l'armature 12.

Par ailleurs tel que particulièrement visible sur les fig.1 et fig.2, il apparaît que pour optimiser les surfaces d'appui des armatures 12 contre les branches 9, tant radialement qu'axialement, il est proposé d'exempter de dépouilles les portions de surface des alvéoles 13 définissant respectivement lesdites assises d'appui radial 16 des armatures 12 contre les branches 9.

Tel que particulièrement visible sur la fig.3, les faces d'extrémité du corps monolithique 14 sont préférentiellement inclinées, tel que précédemment visé, pour réduire l'épaisseur des branches 9 en périphérie du moyeu.

Dans ce contexte et tel que représenté sur les fig.1 à fig.4, les faces d'extrémité axiale du corps monolithique 14 sont munies de cales 17 permettant de compenser leur pente afin de conforter l'assise axiale prise par les armatures 12 contre le moyeu 2. De telles cales 17 sont issues de matériaux composites intégrant une résine thermoplastique permettant d'implanter les cales 17 par intégration au corps monolithique 14, lors d'une opération de surmoulage notamment.

Sur les fig.1 à fig.3, le corps monolithique 14 comporte des troisièmes passages 18 ménagés axialement à travers le corps monolithique 14 en traversant les cales 17. Des troisièmes organes de fixation 19, tels qu'agencés en boulons, s'étendent à travers les troisièmes passages 18 pour fixer les armatures 12 sur le corps monolithique 14, par l'intermédiaire desdits éléments d'armature extérieur 12" reliant les pieds de pales 8 au moyeu 2.

Les pales sont en outre montées mobiles en traînée sur le moyeu.

Dans ce contexte, les faces d'extrémité périphérique des branches 9 sont munies d'organes de protection 20, telles que constitués de pièces d'usure et/ou d'organes de butée limitant la course en traînée des pales.

De tels organes de protection 20 comportent par exemple des pattes de fixation 21 prenant respectivement appui contre les faces d'extrémité axiale du corps monolithique 14.

Les organes de protection 20 sont fixés au corps monolithique 14 par des premiers organes 22 de fixation, tels que des boulons par exemple, s'étendant à travers des premiers passages 23 ménagés à travers les branches 9 en bordure de leur périphérie suivant la direction d'extension axiale du moyeu.

Des cales annexes 24 sont potentiellement interposées entre les pattes de fixation 21 et les faces d'extrémité axiale du corps monolithique 14, pour compenser la pente des faces d'extrémité axiale des branches 9.

De telles cales annexes 24 sont potentiellement intégrées de moulage au corps monolithique 14, et plus particulièrement par surmoulage, en intégrant une résine thermoplastique telle que pour les cales 17 contre lesquelles les armatures 12 prennent axialement appui contre le corps monolithique 14.

Les cales annexes 24 peuvent par exemple encore être chacune formées d'une masse souple, en élastomère notamment, plus ou moins comprimée par les premiers organes 22 de fixation lors de l'installation des organes de protection 20 sur les branches 9. De telles masses souples sont potentiellement intégrées au corps monolithiques 14 et/ou à l'organe de protection 20.

Les différents passages 5, 18, 23 sont formés en ménageant des réserves dans le corps monolithique 14 lors de son moulage et en logeant des bagues de renfort à l'intérieur desdites réserves, telles que des bagues de renfort similaires aux bagues de renfort 27 illustrées sur les schémas (a) et (b) de la fig.4 et logées à l'intérieur des troisièmes passages 18. Les opérations d'usinage du corps monolithique 14 sont alors potentiellement limitées à l'usinage desdites réserves préalablement à l'installation par scellement des bagues de renfort telles que 27 à l'intérieur des réserves.

Selon une variante avantageuse, les bagues de renfort telles que 27 sont potentiellement intégrées au moyeu par surmoulage et les opérations d'usinage du corps monolithique 14 sont alors potentiellement limitées à l'usinage de l'évidement intérieur desdites bagues de renfort telles que 27.

On remarquera aussi sur la fig.2 la présence d'un détrompeur 25 permettant à un opérateur de monter le moyeu 2 sur le rotor suivant une orientation prédéfinie de ses faces axiales d'extrémité en regard sur la ou les platines de fixation 7 équipant l'arbre tournant 3.

## Revendications

1. Rotor de giravion comportant un moyeu (2) en matériaux composites issus d'un empilement de couches successives en tissus de fibres minérales imprégnées d'une résine, le moyeu (2) d'une part étant monté coaxial sur un arbre tournant (3) s'étendant à travers un fût (4) du moyeu (2) et d'autre part comportant une pluralité de branches (9) radialement étendues depuis le fût (4), sur lesquelles branches (9) sont respectivement montées individuellement des pales (1), lesdites pales (1) étant montées individuellement mobiles sur le moyeu au moins en variation de pas,
- le moyeu (2) étant essentiellement formé d'un corps monolithique (14), et
- les pales (1) étant individuellement montées mobiles sur le moyeu (2) par l'intermédiaire de systèmes articulés (10) respectifs comportant chacun une armature (12) de montage respectivement sur chacune des branches (9), lesdites armatures (12) prenant un appui radial contre les branches (9) en étant individuellement logées au moins partiellement dans des alvéoles (13) respectives du corps monolithique (14) s'étendant suivant sa direction axiale d'extension,**caractérisé en ce que** :
- le corps monolithique (14) du moyeu (2) est formé en matériaux composites issus d'un empilement de couches successives de tissus en fibres de carbone poudrées d'une résine thermoplastique et compressées à chaud,
et **en ce que**
- lesdites alvéoles (13) sont déformables sous l'effet de la mise en rotation du rotor, la conformation des alvéoles (13) est définie de fabrication conformément à la formation d'une assise d'appui radial (16) à portée cylindrique des armatures (12) contre les branches (9) sous l'effet de la mise en rotation du rotor à une vitesse de fonctionnement prédéfinie, ladite assise d'appui radial (16) à portée cylindrique s'étendant suivant une génératrice orientée suivant la direction d'extension axiale du moyeu (2) et étant de forme complémentaire avec une surface à portée cylindrique donnée de l'armature (12).

2. Rotor de giravion selon la revendication 1,
**caractérisé** :
**en ce que** le profil des alvéoles (13) dans le plan diamétral du moyeu (2) est de conformation générale oblongue définissant un arc de cercle (AC) ménageant les portions de surface des alvéoles (13) formant lesdites assises d'appui radial (16) des armatures (12) contre les branches (9), et
**en ce qu'**un premier rayon (R1) dudit arc de cercle (AC) défini de fabrication est plus important qu'un deuxième rayon (R2) conféré audit arc de cercle (AC) sous l'effet de la mise en rotation du rotor à ladite vitesse de fonctionnement prédéfinie, ledit deuxième rayon (R2) définissant en situation de fonctionnement du rotor ladite assise d'appui radial (16) à portée cylindrique des armatures (12) contre les branches (9).

3. Rotor de giravion selon l'une quelconque des revendications 1 et 2,
**caractérisé en ce que** les portions de surface des alvéoles (13) formant les assises d'appui radial (16) des armatures (12) contre les branches (9) sont exemptes de dépouilles de démoulage du corps monolithique (14).

4. Rotor de giravion selon l'une quelconque des revendications 1 à 3,
**caractérisé en ce que** les armatures (12) étant chacune équipées d'un corps stratifié en élastomère/métal (11) procurant une mobilité multidirectionnelle des pales (1) sur le moyeu (2), les armatures (12) sont respectivement placées en appui radial contre les branches (9) suivant une surface à portée cylindrique définie par une génératrice orientée suivant la direction axiale d'extension du moyeu (2).

5. Rotor de giravion selon l'une quelconque des revendications 1 à 4,
**caractérisé en ce que** l'une au moins des faces d'extrémité axiale dudit corps monolithique (14) étant au moins partiellement inclinée par rapport au plan de rotation du moyeu (2), le corps monolithique (14) est muni de cales (17) de compensation de la pente résultant de l'inclinaison de ladite au moins une face d'extrémité axiale du corps monolithique (14), lesdites cales (17) ménageant sur le moyeu (2) des assises d'appui axial des armatures (12) contre les branches (9).

6. Rotor de giravion selon la revendication 5,
**caractérisé en ce que** lesdites cales (17) sont intégrées de moulage au corps monolithique (14).

7. Rotor de giravion selon la revendication 6,
**caractérisé en ce que** les cales (17) sont plus particulièrement intégrées au corps monolithique (14) par surmoulage, les cales (17) étant issues de matériaux composites intégrant des fibres minérales noyées dans une résine thermoplastique.

8. Rotor de giravion selon l'une quelconque des revendications 1 à 7,
**caractérisé en ce que** les pales (1) étant en outre montées mobiles en traînée sur le moyeu (2), les faces d'extrémité périphérique des branches (9) sont chacune munies d'un organe de protection (20).

9. Rotor de giravion selon la revendication 8,
**caractérisé en ce que** ledit organe de protection (20) est formé indifféremment d'une pièce d'usure et/ou d'un organe de butée limitant la course individuelle en traînée des pales (1).

10. Rotor de giravion selon l'une quelconque des revendications 8 et 9,
**caractérisé en ce que** lesdits organes de protection (20) sont chacun équipés de pattes de fixation (21) prenant respectivement appui contre les faces d'extrémité axiale du corps monolithique (14) et étant fixées à l'extrémité périphérique des branches (9) par des premiers organes de fixation (22) s'étendant respectivement à travers des premiers passages (23) ménagés dans le corps monolithique (14) suivant sa direction axiale d'extension.

11. Rotor de giravion selon l'une quelconque des revendications 1 à 10,
**caractérisé en ce que** ledit corps monolithique (14) est d'une épaisseur diminuant progressivement depuis une zone axialement centrale (15), dans laquelle est ménagé au moins le fût (4), vers la bordure extérieure d'une zone périphérique du corps monolithique (14) intégrant les branches (9).

12. Rotor de giravion selon l'une quelconque des revendications 1 à 11,
**caractérisé en ce que** ledit corps monolithique (14) est symétrique de part et d'autre d'un plan diamétral axialement médian (P).

13. Rotor de giravion selon l'une quelconque des revendications 1 à 12,
**caractérisé en ce que** les branches (9) étant saillantes vers la périphérie du corps monolithique (14), les parties en saillie (26) des branches (9) sont d'une dimension (d1) d'extension radiale comprise entre 0,2 et 0,3 fois le diamètre d'encombrement (D) du corps monolithique (14) et, considérant une branche (9) donnée, la distance (d2) de séparation entre l'extrémité périphérique des branches (9) et l'assise d'appui radial (16) des armatures (12) contre les branches (9) est comprise entre 0,1 et 0,15 fois le diamètre d'encombrement (D) du corps monolithique (14).

14. Rotor de giravion selon l'une quelconque des revendications 11 à 13,
**caractérisé en ce que** ledit corps monolithique (14) comporte :
- ladite zone axialement centrale (15) d'une épaisseur (E1) constante dans laquelle sont ménagés au moins le fût (4) et des deuxièmes passages (5) orientés suivant la direction axiale d'extension du moyeu (2) en étant répartis en bordure autour du fût (4), lesdits deuxièmes passages (5) recevant des deuxièmes organes de fixation (6) fixant le moyeu (2) à au moins une platine (7) de l'arbre tournant (3) disposée en vis-à-vis de l'une quelconque des faces d'extrémité axiale du moyeu (2),
- ladite zone périphérique ménagée en prolongement radial de ladite zone axialement centrale (15) en diminuant progressivement en épaisseur (E2) vers sa périphérie depuis l'épaisseur (E1) de ladite zone axialement centrale, ladite zone périphérique comportant au moins en partie chacune desdites alvéoles (13) de réception respective des armatures (12) et des troisièmes passages (18) orientés suivant la direction d'extension axiale du moyeu (2), lesdits troisièmes passages (18) recevant des troisièmes organes de fixation (24) fixant les armatures (12) au moyeu (2).

15. Rotor de giravion selon l'une quelconque des revendications 12 à 14,
**caractérisé** :
**en ce que** l'épaisseur (E2) du corps monolithique (14) considérée à sa périphérie est de l'ordre comprise entre 30% et 40% de l'épaisseur (E1) du corps monolithique (14) considérée dans sa zone axialement centrale (15), et
**en ce que** le diamètre d'encombrement (D) du corps monolithique (14) est de l'ordre compris entre 6 et 10 fois l'épaisseur (E1) du corps monolithique (14) considérée dans ladite zone axialement centrale (15).

16. Rotor de giravion selon l'une quelconque des revendications 10 à 15,
**caractérisé en ce qu'**indifféremment lesdits premiers passages (23) et/ou lesdits deuxièmes passages (5) et/ou lesdits troisièmes passages (18) sont chacun munis de bagues de renfort (27).

17. Rotor de giravion selon la revendication 16,
**caractérisé en ce que** lesdites bagues de renfort (27) sont intégrées au corps monolithique (14) par scellement.

18. Rotor de giravion selon la revendication 16,
**caractérisé en ce que** lesdites bagues de renfort (27) sont intégrées au corps monolithique (14) par surmoulage.

## Patentansprüche

1. Rotor eines Drehflügelflugzeugs mit einer Nabe (2) aus Verbundmaterialien, hervorgegangen aus einem Stapel aufeinanderfolgender Schichten aus mit einem Harz imprägnierten Geweben aus Mineraléfasern, wobei die Nabe (2) einerseits koaxial auf einer sich drehenden Welle (3) montiert ist, die sich durch einen Schaft (4) der Nabe (2) erstreckt, und andererseits eine Mehrzahl von Armen (9) aufweist, die sich ausgehend von dem Schaft (4) radial erstrecken, wobei auf diesen Armen (9) jeweils einzeln Rotorblätter (1) montiert sind, wobei die Rotorblätter (1) einzeln beweglich mindestens bezüglich einer Anstellwinkelveränderung beweglich sind,
- wobei die Nabe (2) im Wesentlichen aus einem monolithischen Körper (14) geformt ist, und
- die Rotorblätter einzeln beweglich auf der Nabe (2) über jeweilige angelenkte Systeme (10) montiert sind, die jeweils eine Montagearmatur (12) auf jedem der Arme (9) aufweisen, wobei die Armaturen (12) radial gegen die Arme (9) anliegen, indem sie einzeln zumindest teilweise in entsprechenden Kammer (13) des monolithischen Körpers (14) gelagert sind, die sich entlang dessen axialer Erstreckungsrichtung erstrecken,
**dadurch gekennzeichnet, dass**:
- der monolithische Körper (14) der Nabe (2) aus Verbundmaterialien geformt ist, die aus einem Stapel von aufeinanderfolgenden Schichten aus mit einem thermoplastischen Harz bestäubten und heißgepressten Carbonfasern hevorgegangen sind,
und dadurch dass
- die Kammern unter der Einwirkung des Versetzens des Rotors in eine Rotationsbewegung verformbar sind, wobei die Ausgestaltung der Kammern (13) durch die Herstellung in Übereinstimmung mit der Ausbildung eines radialen Auflagers (16) mit zylindrischer Auflagefläche der Armaturen (12) auf den Armen (9) unter der Einwirkung des Versetzens des Rotors in eine Rotationsbewegung mit einer vordefinierten Betriebsgeschwindigkeit, wobei das radiale Auflager (16) mit zylindrischer Auflagefläche sich entlang einer Erzeugenden erstreckt, die entlang der axialen Erstreckungsrichtung der Nabe (2) orientiert ist, und eine komplementäre Form zu einer gegebenen zylinderförmigen Auflagefläche der Armatur (12) aufweist.

2. Rotor eines Drehflügelflugzeugs nach Anspruch 1,
**dadurch gekennzeichnet, dass**:
das Profil der Kammern (13) in der zur Nabe (2) diametral ausgerichteten Ebene allgemein länglich ausgebildet ist und einen Kreisbogen (AC) definiert, der die Abschnitte der Oberfläche der Kammern (13) bildet, die die radialen Auflager (16) der Armaturen (12) gegen die Arme (9) bilden, und
dadurch, dass ein erster Radius (R1) des Kreisbogens (AC), der durch die Herstellung definiert ist, größer ist als ein zweiter Radius (R2), der dem Kreisbogen (AC) unter der Einwirkung des Versetzens des Rotors in eine Drehbewegung mit der vordefinierten Betriebsgeschwindigkeit verliehen wird, wobei der zweite Radius (R2) während des Betriebs des Rotors das radiale Auflager (16) mit zylindrischer Auflagefläche der Armaturen (12) gegen die Arme (9) definiert.

3. Rotor eines Drehflügelflugzeugs nach einem der Ansprüche 1 und 2,
**dadurch gekennzeichnet, dass** die Abschnitte der Oberfläche der Kammern (13), die die radialen Auflager (16) der Armaturen (12) gegen die Arme (9) bilden, keine Formentrenngrate des monolithischen Körpers (14) aufweisen.

4. Rotor eines Drehflügelflugzeugs nach einem der Ansprüche 1 bis 3, **dadurch gekennzeichnet, dass** die Armaturen (12) jeweils mit einem Schichtkörper aus Elastomer/ Metall (11) ausgerüstet sind, der den Rotorblättern (1) auf der Nabe (2) eine Beweglichkeit in vielen Richtungen verleiht, wobei die Armaturen (12) jeweils radial gegen die Arme (9) entlang einer zylinderförmigen Auflagefläche anliegen, die durch eine Erzeugende definiert ist, die in der axialen Erstreckungsrichtung der Nabe (2) orientiert ist.

5. Rotor eines Drehflügelflugzeugs nach einem der Ansprüche 1 bis 4, **dadurch gekennzeichnet, dass** mindestens eine der axialen Endflächen des monolithischen Körpers (14) mindestens teilweise relativ zu der Rotationsebene der Nabe (2) geneigt ist, wobei der monolithische Körper (14) mit Keilen (17) zum Ausgleich der Neigung, die sich aus der Neigung der mindestens einen axialen Endfläche des monolithischen Körpers (14) ergibt, versehen ist, wobei die Keile (17) auf der Nabe (2) axiale Auflager der Armaturen (12) gegen die Arme (9) bilden.

6. Rotor eines Drehflügelflugzeugs nach Anspruch 5,
**dadurch gekennzeichnet, dass** die Keile (17) durch Formguss in den monolithischen Körper (14) integriert sind.

7. Rotor eines Drehflügelflugzeugs nach Anspruch 6,
**dadurch gekennzeichnet, dass** die Keile (17) insbesondere durch Überformung in den monolithischen Körper (14) integriert sind, wobei die Keile (17) aus Verbundmaterialien hervorgehen, die in ein thermoplastisches Harz getränkte Mineralstofffasern umfassen.

8. Rotor eines Drehflügelflugzeugs nach einem der Ansprüche 1 bis 7, **dadurch gekennzeichnet, dass** die Rotorblätter (1) ferner in Strömungswiderstandsrichtung beweglich auf der Nabe (2) montiert sind, wobei die Umfangsendflächen der Arme (9) jeweils mit einem Schutzelement (20) versehen sind.

9. Rotor eines Drehflügelflugzeugs nach Anspruch 8,
**dadurch gekennzeichnet, dass** das Schutzelement (20) gleichermaßen aus einem Abnutzungsteil und/oder einem Anschlagselement, das die einzelne Bewegung in Luftwiderstandsrichtung der Rotorblätter (1) begrenzt, geformt ist.

10. Rotor eines Drehflügelflugzeugs nach einem der Ansprüche 8 und 9,
**dadurch gekennzeichnet, dass** die Schutzelemente (20) jeweils mit Befestigungslaschen (21) ausgerüstet sind, die jeweils an den axialen Endflächen des monolithischen Körpers (14) anliegen, und an einem Umfangsende der Arme (9) durch erste Befestigungselemente (22) befestigt sind, die sich jeweils durch erste Durchführungen (23) erstrecken, die in dem monolithischen Körper (14) entlang dessen axialer Erstreckungsrichtung vorgesehen sind.

11. Rotor eines Drehflügelflugzeugs nach einem der Ansprüche 1 bis 10,
**dadurch gekennzeichnet, dass** der monolithische Körper (14) eine Dicke aufweist, die stetig ausgehend von einem mittleren axialen Bereich (15), in dem mindestens der Schaft (4) vorgesehen ist, hin zu dem äußeren Rand eines Umfangsbereichs des monolithischen Körpers (14), der die Arme (9) umfasst, abnimmt.

12. Rotor eines Drehflügelflugzeugs nach einem der Ansprüche 1 bis 11,
**dadurch gekennzeichnet, dass** der monolithische Körper (14) zu beiden Seiten einer diametralen axialen Mittelebene (P) symmetrisch ist.

13. Rotor eines Drehflügelflugzeugs nach einem der Ansprüche 1 bis 12,
**dadurch gekennzeichnet, dass** die Arme (9) zum Umfang des monolithischen Körpers (14) hin vorstehen, wobei die vorstehenden Teile (26) der Arme (9) eine radiale Erstreckungsabmessung (d1) aufweisen, die zwischen dem 0,2- und 0,3-fachen des Durchmessers des Baumaßes (D) des monolithischen Körpers (14) liegt, und wobei bei einem gegebenen Arm (9) der Trennungsabstand (d2) zwischen dem Umfangsende der Arme (9) und dem radialen Auflager (16) der Armaturen (12) an den Armen (9) zwischen dem 0,1- und 0,15-fachen des Durchmessers des Baumaßes (D) des monolithischen Körpers (14) liegt.

14. Rotor eines Drehflügelflugzeugs nach einem der Ansprüche 11 bis 13,
**dadurch gekennzeichnet, dass** der monolithische Körper (14) aufweist:
- den mittleren axialen Bereich (15) mit einer konstanten Dicke (E1), in dem mindestens der Schaft (4) und zweite Durchgänge (5) vorgesehen sind, die entlang der axialen Erstreckungsrichtung der Nabe (2) ausgerichtet sind und um den Schaft (4) an dessen Rand verteilt angeordnet sind, wobei die zweiten Durchgänge (5) zweite Befestigungselemente (6) aufnehmen, die die Nabe (2) an mindestens einer Platte (7) der Drehwelle (3) befestigen, die gegenüber einer beliebigen axialen Endfläche der Nabe (2) angeordnet ist,
- den Umfangsbereich, der in radialer Verlängerung des mittleren axialen Bereichs (15) vorgesehen ist, dessen Dicke (E2) stetig ausgehend von der Dicke (E1) des mittleren axialen Bereichs zu dessen Umfangsrand hin abnimmt, wobei der Umfangsrandbereich mindestens teilweise die Kammern (13) zur Aufnahme der Armaturen (12) und dritte Durchgänge (18) aufweist, die entlang der axialen Erstreckungsrichtung der Nabe (2) ausgerichtet sind, wobei die dritten Durchgänge (18) dritte Befestigungselemente (24) aufnehmen, die die Armaturen (12) an der Nabe (2) befestigen.

15. Rotor eines Drehflügelflugzeugs nach einem der Ansprüche 12 bis 14,
**dadurch gekennzeichnet, dass**:
die Dicke (E2) des monolithischen Körpers (14) an seinem Umfangsrand zwischen 30 und 40 % der Dicke (E1) des monolithischen Körpers (14) in seinem mittleren zentralen Bereich (15) beträgt, und
der Baumaßdurchmesser (D) des monolithischen Körpers (14) zwischen dem 6- und dem 10-fachen der Dicke (E1) des monolithischen Körpers (14) in seinem mittleren axialen Bereich (15) beträgt.

16. Rotor eines Drehflügelflugzeugs nach einem der Ansprüche 10 bis 15,
**dadurch gekennzeichnet, dass** gleichermaßen die ersten Durchgänge (23) und/oder die zweiten Durchgänge (5) und/oder die dritten Durchgänge (18) jeweils mit Verstärkungsringen (27) versehen sind.

17. Rotor eines Drehflügelflugzeugs nach Anspruch 16,
**dadurch gekennzeichnet, dass** die Verstärkungsringe (27) in dem monolithischen Körper (14) durch Vergießen integriert sind.

18. Rotor eines Drehflügelflugzeugs nach Anspruch 16,
**dadurch gekennzeichnet, dass** die Verstärkungsringe (27) in dem monolithischen Körper (14) durch Überformung integriert sind.

## Claims

1. Rotorcraft rotor comprising a hub (2) made of composite materials obtained by stacking successive layers of mineral fiber fabric that are impregnated with a resin, the hub (2) on the one hand being mounted coaxially on a rotating shaft (3) extending through a bore (4) of the hub (2) and on the other hand comprising a plurality of branches (9) extending radially from the bore (4), on which branches (9) blades (1) are respectively individually mounted, said blades (1) being individually movably mounted on the hub at least for varying pitch,
- the hub (2) being essentially formed of a monolithic body (14), and
- the blades (1) being individually movably mounted on the hub (2) by way of respective hinge systems (10), each comprising a fitting (12) for mounting respectively on each of the branches (9), said fittings (12) bearing radially against the branches (9) while being individually housed at least partially in respective sockets (13) of the monolithic body (14) extending in the axial extension direction thereof,
**characterized in that**
- the monolithic body (14) of the hub (2) is formed of composite materials obtained by stacking successive layers of carbon fiber fabric dusted with a thermoplastic resin and compressed while hot,
and **in that**
- said sockets (13) are deformable under the effect of the rotor being set in rotation, the shape of the sockets (13) is defined on fabrication so as to form a cylindrical radial bearing seat (16) for the fittings (12) to bear against the branches (9) under the effect of the rotor being set in rotation at a predefined operating speed, said cylindrical radial bearing seat (16) extending along a generatrix oriented in the axial extension direction of the hub (2) and being of a shape that is complementary to a given cylindrical surface of the fitting (12).

2. Rotorcraft rotor according to claim 1, **characterized in that** the profile of the sockets (13) in the diametral plane of the hub (2) is generally oblong in shape, defining an arc of a circle (AC) providing the surface portions of the sockets (13) that form said radial bearing seats (16) for the fittings (12) to bear against the branches (9), and
**in that** a first radius (R1) of said arc of a circle (AC) defined on fabrication is greater than a second radius (R2) that is conferred on the arc of a circle (AC) under the effect of the rotor being set in rotation at said predefined operating speed, said second radius (R2) defining, in the operating situation of the rotor, said cylindrical radial bearing seat (16) for the fittings (12) to bear against the branches (9).

3. Rotorcraft rotor according to any one of claims 1 and 2, **characterized in that** the surface portions of the sockets (13) that form the radial bearing seats (16) for the fittings (12) to bear against the branches (9) are free from any tapers for unmolding the monolithic body (14).

4. Rotorcraft rotor according to any one of claims 1 to 3, **characterized in that**, the fittings (12) each being equipped with a layered elastomer/metal body (11) providing a multidirectional mobility of the blades (1) on the hub (2), the fittings (12) are respectively placed to bear radially against the branches (9) along a cylindrical surface defined by a generatrix oriented in the axial extension direction of the hub (2).

5. Rotorcraft rotor according to any one of claims 1 to 4, **characterized in that**, at least one of the axial end faces of said monolithic body (14) being at least partially inclined relative to the plane of rotation of the hub (2), the monolithic body (14) is provided with wedges (17) for compensating the slope that results from the inclination of said at least one axial end face of the monolithic body (14), said wedges (17) providing on the hub (2) axial bearing seats for the fittings (12) to bear against the branches (9).

6. Rotorcraft rotor according to claim 5, **characterized in that** said wedges (17) are incorporated in the monolithic body (14) by molding.

7. Rotorcraft rotor according to claim 6, **characterized in that** the wedges (17) are more particularly incorporated in the monolithic body (14) by overmolding, the wedges (17) being obtained from composite materials which incorporate mineral fibers embedded in a thermoplastic resin.

8. Rotorcraft rotor according to any one of claims 1 to 7, **characterized in that**, the blades (1) being also mounted to be movable with lead/lag motion on the hub (2), the peripheral end faces of the branches (9) are each provided with a protection member (20).

9. Rotorcraft rotor according to claim 8, **characterized in that** said protection member (20) may equally be formed by a wear part and/or by an abutment member limiting the individual lead/lag stroke of the blades (1).

10. Rotorcraft rotor according to any one of claims 8 and 9, **characterized in that** said protection members (20) are each equipped with fastener tabs (21) bearing respectively against the axial end faces of the monolithic body (14) and being fastened to the peripheral end of the branches (9) by first fastener members (22) extending respectively through first passages (23) provided in the monolithic body (14) in the axial extension direction thereof.

11. Rotorcraft rotor according to any one of claims 1 to 10, **characterized in that** said monolithic body (14) is of a thickness that decreases progressively from an axially central zone (15), in which at least the bore (4) is provided, toward the outer margin of a peripheral zone of the monolithic body (14) incorporating the branches (9).

12. Rotorcraft rotor according to any one of claims 1 to 11, **characterized in that** said monolithic body (14) is symmetrical on either side of an axially median diametral plane (P).

13. Rotorcraft rotor according to any one of claims 1 to 12, **characterized in that**, the branches (9) projecting toward the periphery of the monolithic body (14), the projecting portions (26) of the branches (9) have a radial extension dimension (d1) of between 0.2 and 0.3 times the overall diameter (D) of the monolithic body (14) and, with reference to a given branch (9), the separation distance (d2) between the peripheral end of the branches (9) and the radial bearing seat (16) for the fittings (12) to bear against the branches (9) is between 0.1 and 0.15 times the overall diameter (D) of the monolithic body (14).

14. Rotorcraft rotor according to any one of claims 11 to 13, **characterized in that** said monolithic body (14) comprises:
- said axially central zone (15) of a constant thickness (E1) in which there are provided at least the bore (4) and second passages (5) oriented in the axial extension direction of the hub (2) and distributed in a margin around the bore (4), said second passages (5) receiving second fastener members (6) which fasten the hub (2) to at least one plate (7) of the rotating shaft (3) placed facing either one of the axial end faces of the hub (2),
- said peripheral zone which radially extends said axially central zone (15) while decreasing progressively in thickness (E2) toward its periphery from the thickness (E1) of said axially central zone, said peripheral zone comprising at least in part each of said sockets (13) for respectively receiving the fittings (12) and third passages (18) oriented in the axial extension direction of the hub (2), said third passages (18) receiving third fastener members (24) which fasten the fittings (12) to the hub (2).

15. Rotorcraft rotor according to any one of claims 12 to 14, **characterized**:
**in that** the thickness (E2) of the monolithic body (14) at its periphery is of the order of between 30% and 40% of the thickness (E1) of the monolithic body (14) in its axially central zone (15), and
**in that** the overall diameter (D) of the monolithic body (14) is of the order of between 6 and 10 times the thickness (E1) of the monolithic body (14) in said axially central zone (15).

16. Rotorcraft rotor according to any one of claims 10 to 15, **characterized in that** equally said first passages (23) and/or said second passages (5) and/or said third passages (18) are each provided with reinforcing rings (27).

17. Rotorcraft rotor according to claim 16, **characterized in that** said reinforcing rings (27) are incorporated in the monolithic body (14) by sealing.

18. Rotorcraft rotor according to claim 16, **characterized in that** said reinforcing rings (27) are incorporated in the monolithic body (14) by overmolding.
